# EUROPÄISCHE PATENTANMELDUNG

(11) **EP 1 247 604 A1**
(43) Veröffentlichungstag der Anmeldung: **09.10.2002**
(21) Anmeldenummer: 01121235.4
(22) Anmeldetag: 05.09.2001
(51) Int. Cl.: B23C 5/14, B23C 5/10

(54) **Fräswerkzeug für Goldschmiede und Fassen**

(71) Anmelder: Busch & Co.KG, 51766 Engelskirchen (DE)
(72) Erfinder: Busch, Gert, 51766 Engelskirchen (DE)
(74) Vertreter: Patentanwälte Maxton & Langmaack

(57) **Zusammenfassung**

Die Erfindung betrifft ein Fräswerkzeug zum Bearbeiten von Enden stiftförmiger Werkstücke aus Metall, insbesondere Werkstücke aus Edelmetall, mit einem Spannschaft (1) und mit einem Schneidkopf (2), der axial ausgerichtete Schneidfinger (3) aufweist, die in bezug auf die Drehachse (4) und in Umfangsrichtung jeweils mit Abstand zueinander angeordnet sind und die jeweils auf ihrer nach innen gerichteten Seite mit einer Schneidkante (5) versehen sind, deren Kontur so geformt ist, daß bei Rotation die am Werkstück herzustellende Kontur entsteht.

## Beschreibung

Bei der Fertigung eines mit Edelsteinen versehenen Schmuckstücks ist es erforderlich, die Edelsteine jeweils mit einer Fassung zuverlässig und dauerhaft mit den übrigen Teilen des Schmuckstücks zu verbinden. Eine der häufigsten Fassungsarten ist die sogenannte Krappenfassung. Diese besteht im wesentlichen aus mehreren entsprechend der Umfangskontur des zu fassenden Edelsteins mit dem übrigen Teil des zu fertigenden Schmuckstücks verbundenen kurzen Stiften, deren freie Enden nach dem Einlegen des Edelsteins umgebogen und so den Edelstein formschlüssig fassen.

Zur Vorbereitung einer derartigen Krappenfassung ist es erforderlich, die freien Enden der Stifte bzw. Stotzen nach dem Verlöten mit dem zu fertigenden Schmuckstück gratfrei abzurunden. Zu diesem Zweck werden maschinell angetriebene, rotierende, von Hand geführte Fräswerkzeuge eingesetzt. Diese Fräswerkzeuge weisen einen Spannschaft und einen Schneidkopf auf, der eine becherförmige Ausnehmung hat, die auf ihrer Innenfläche mit mehreren Schneiden versehen ist. Es werden Fräswerkzeuge mit unterschiedlichen Abmessung mit Innendurchmessern der Ausnehmung zwischen 0,6 mm und 8 mm angeboten.

Diese kleinen Abmessungen des Schneidkopfes lassen, bedingt durch die Lage der Schneiden auf der Innenfläche des becherförmigen Ausnehmung praktisch keine Abfuhr der anfallenden Späne zu. Dies hat zum einen eine verminderte Abtragsleistung zur Folge. Zum anderen müssen zur Wiederherstellung der Funktionsfähigkeit des Fräswerkzeugs in regelmäßigen Abständen die in der Ausnehmung zwischen den Schneiden festsitzenden Späne entfernt werden. Hierzu muß der Arbeitsgang unterbrochen werden, so daß eine Bearbeitung in einem Zuge oftmals nicht möglich ist. Außerdem können an den Schneiden festsitzende Späne zu Riefen oder dergl. führen; das ist nachteilig, da für die bearbeiteten abgerundeten freien Enden der Stotzen eine in der Regel glatte Oberfläche erwünscht ist.

Der Erfindung liegt die Aufgabe zugrunde, ein Fräswerkzeug zu schaffen, daß diese Nachteile vermeidet.

Zum Bearbeiten von Enden stiftförmiger Werkstücke aus Metall, insbesondere aus Edelmetall, wird diese Aufgabe gelöst durch ein Fräswerkzeug mit einem Spannschaft und einem Schneidkopf, der axial ausgerichtete Schneidfinger aufweist, die in bezug auf die Drehachse und in Umfangsrichtung jeweils mit Abstand zueinander angeordnet sind und die jeweils auf ihrer nach innen gerichteten Seite mit einer Schneide versehen sind, deren Kontur so geformt ist, daß bei Rotation die am Werkstück herzustellende Kontur entsteht. Der Vorteil eines derart ausgebildeten Fräswerkzeugs besteht darin, daß die bei der Bearbeitung anfallenden Späne seitlich abfließen und an den Schneiden sich keine Späne festsetzen können, so daß sich eine gute Abtragsleistung und eine hohe Oberflächengüte ergibt sowie ein kontinuierliches Arbeiten möglich ist. Außerdem ist eine höhere Standzeit für das Fräswerkzeug gegeben.

In Ausgestaltung der Erfindung ist vorgesehen, daß die Schneiden der einzelnen Schneidfinger in der Drehachse zusammenlaufen, so daß infolge der Rotation die das freie Ende des zu bearbeitenden Stotzens abschließende Werkstückkontur entsteht.

In besonders vorteilhafter Ausgestaltung der Erfindung ist vorgesehen, daß die Schneidfinger diametral gegenüberliegend und in Umfangsrichtung in gleichem Abstand zueinander angeordnet sind. Hierbei ist in weiterer vorteilhafter Ausgestaltung der Erfindung vorgesehen, daß die Schneiden der sich gegenüberliegenden Schneidfingern eine der herzustellenden Werkstückkontur entsprechend geformte Gesamtschneide darstellen, die in weiterer Ausgestaltung der Erfindung eine gekrümmte Kontur, vorzugsweise eine Teilkreiskontur aufweist.

Eine Anordnung von wenigstens vier Schneidfingern am Schneidkopf, wobei jeweils einander gegenüberliegende Schneidfinger mit ihren Schneiden eine Gesamtschneide bilden, läßt sich in einfacher Weise geometrisch durch zwei sich unter 90° kreuzende, am freien Ende des Schneidkopfes angebrachte Rillen herstellen. Dadurch entstehen an den einzelnen Schneidfingern Schneidkanten, die im Bereich des freien Endes der Schneidfinger durch jeweils zwei unter einem Winkel von 90° stehenden Begrenzungsflächen entstehen, so daß von einer höheren Lebensdauer auszugehen ist, als bei den bisher üblichen Fräswerkzeugen mit einem Schneidwinkel von etwa -10°. Die Stärke der Schneidfinger kann hier bei einem vorgegebenen Innendurchmesser des Schneidkopfes auch noch durch den Außendurchmesser variiert werden.

Die Erfindung betrifft ferner ein Verfahren zur Herstellung eines mit einem Spannschaft und einem Schneidkopf mit axial ausgerichteten Schneidfingern versehenen Fräswerkzeugs zur Bearbeitung von Metallen entsprechend den Ansprüchen 1 bis 7. Das Verfahren ist erfindungsgemäß dadurch gekennzeichnet, daß in einen mit dem Spannschaft verbundenen Schneidkopfrohling stirnseitig wenigstens zwei sich unter einem Winkel kreuzende Rillen eingearbeitet werden. Das Einarbeiten der Rillen kann selbst bei einem Abstand der sich gegenüberliegenden Schneidkanten von nur 0,6 mm mit rotierenden Werkzeugen erfolgen, die ihrerseits einen großen Durchmesser aufweisen, da es nur auf die der Breite der zu fertigenden Rille entsprechende Dicke sowie der zu erzeugenden Kontur des Werkzeuges ankommt. Damit ist aber auch die Möglichkeit gegeben, zumindest den Schneidkopf für ein derartiges Fräswerkzeug nicht nur aus Stahlwerkstoffen in Werkzeugstahlqualität, sondern auch aus härteren Schneidwerkstoffen herzustellen, wie beispielsweise Werkzeugstahl in HSS-Qualität, in den nach dem Härten die Rillen eingeschliffen werden, oder gesinterten Schneidwerkstoffen wie Hartmetall oder dergl.

Durch eine entsprechende Formgebung der Arbeitskontur des zur Herstellung der Rillen verwendeten Werkzeugs kann durch die aufeinanderfolgenden Arbeitsgänge bei Einarbeiten der Rillen die Kontur der Gesamtschneide geformt werden.

Die Erfindung wird anhand schematischer Zeichnungen in starker Vergrößerung näher erläutert. Es zeigen:
- Fig. 1: eine Seitenansicht eines Fräswerkzeugs mit vier Schneidfingern,
- Fig. 2: eine Aufsicht auf den Schneidkopf des Fräswerkzeugs gem. Fig. 1,
- Fig. 3: einen Teilschnitt entsprechend der Linie III-III in Fig. 2,
- Fig. 4: eine Aufsicht gem. Fig. 2 mit Darstellung der Schneidkanten,
- Fig. 5: eine Aufsicht auf einen Schneidkopf mit sechs Schneidfingern,
- Fig. 6: eine schematische erläuternde Darstellung bezüglich des Herstellungsverfahrens für das erfindungsgemäße Fräswerkzeug,
- Fig. 7: eine Seitenansicht einer modifizierten Form des Fräswerkzeugs gem. Fig. 1.

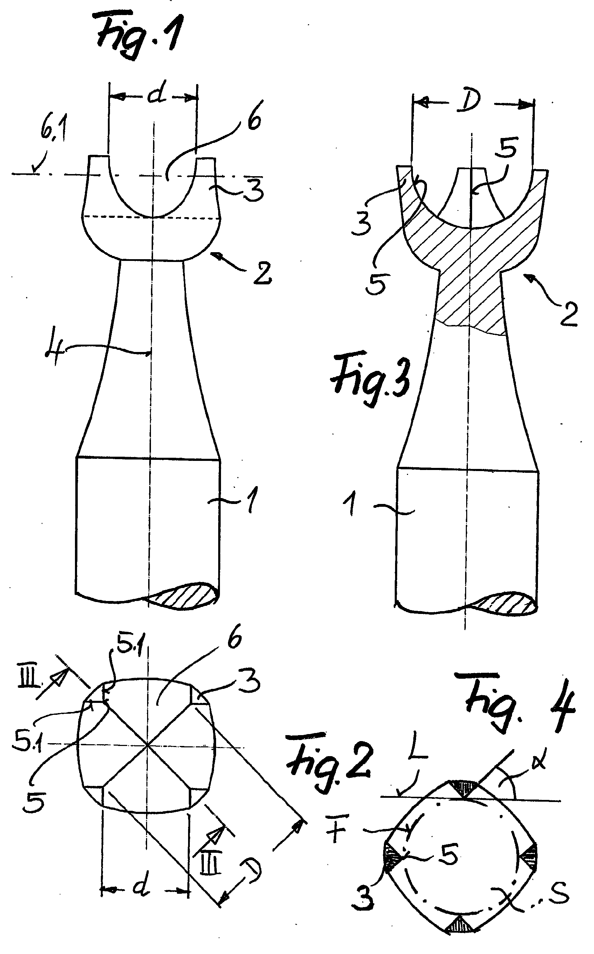

Das in Fig. 1 dargestellte Fräswerkzeug weist einen Spannschaft 1 auf, der mit einem Schneidkopf 2 fest verbunden ist. Der Schneidkopf 2 ist mit axial ausgerichteten Schneidfingern 3, beim dargestellten Ausführungsbeispiel vier axial ausgerichteten Schneidfingern 3 versehen.

Wie die Aufsicht gem. Fig. 2 erkennen läßt, sind am Schneidkopf 2 jeweils zwei Schneidfinger mit Abstand diametral zueinander angeordnet und auch in Umfangsrichtung jeweils mit Abstand zueinander angeordnet.

Wie aus Fig. 2 ersichtlich, stehen die jeweils eine Schneidkante 5 begrenzenden Seitenflächen 5.1 eines Schneidfingers 3 unter einem Winkel von 90° zueinander. Wie in Fig. 4 dargestellt, greifen die Schneidkanten 5 an der Oberfläche F des zu bearbeitenden Stotzens S an. Bezogen auf die tangential an die Oberfläche F anzulegende Eingriffslinie L für die Schneidkante 5 ergibt sich somit ein Schneidwinkel α von -45°. Dieser Schneidwinkel α ist deutlich stumpfer als der bei bisher üblichen Fräswerkzeugen vorhandene Schneidwinkel von etwa -10°. Der stumpfe Winkel ist im Hinblick auf die verhältnismäßig geringe Härte der zu bearbeitenden Werkstoffe, in der Regel Edelmetalle, wie Platin oder Gold, aufgrund der deutlich höheren Härte der für den Schneidkopf 2 verwendbaren Schneidwerkstoffe jedoch nicht von Nachteil. Außerdem kann das Fräswerkzeug in beiden Drehrichtungen rotierend eingesetzt werden.

Die Schneidfinger 3 weisen jeweils der Drehachse 4 zugekehrte Schneidkanten 5 auf, so daß die Schneidkanten 5 von jeweils zwei gegenüberliegenden Schneidfingern 3 einer der herzustellenden Werkstückkontur entsprechende Gesamtschneide darstellen. Die Schneidkanten 5 und damit auch die Gesamtschneide weisen eine gekrümmte Kontur, vorzugsweise eine Teilkreiskontur auf, wie dies in der Schnittdarstellung von Fig. 3 ersichtlich ist.

Auf Grund der geometrischen Gegebenheiten der sich kreuzenden Gesamtschneiden wird die an den freien Enden der Schneidfinger vorhandene deutliche Ausprägung der Schneidkanten 5 zum Kreuzungspunkt in der Drehachse 4 hin immer geringer. In unmittelbarer Nähe des Kreuzungspunktes ist dann keine Schneidkante mehr vorhanden.

Da jedoch das Fräswerkzeug auf das freie Ende eines zylindrischen Stotzens aufgesetzt wird, um dieses kalottenförmig bzw. in etwa halbkugelförmig abzurunden, wird die größte Zerspanungsleistung ohnehin im Bereich der freien Enden der Schneidfinger 2 benötigt. Im Bereich des Kreuzungspunktes genügt eine eher polierende Einwirkung auf die Oberfläche.

Während die Kontur der Gesamtschneide die am herzustellenden Werkstück geforderte räumliche Oberflächenkontur bestimmt, ergibt der Abstand D von zwei einander gegenüberliegenden Schneidkanten 5 den Arbeitsdurchmesser des jeweiligen Fräswerkzeugs.

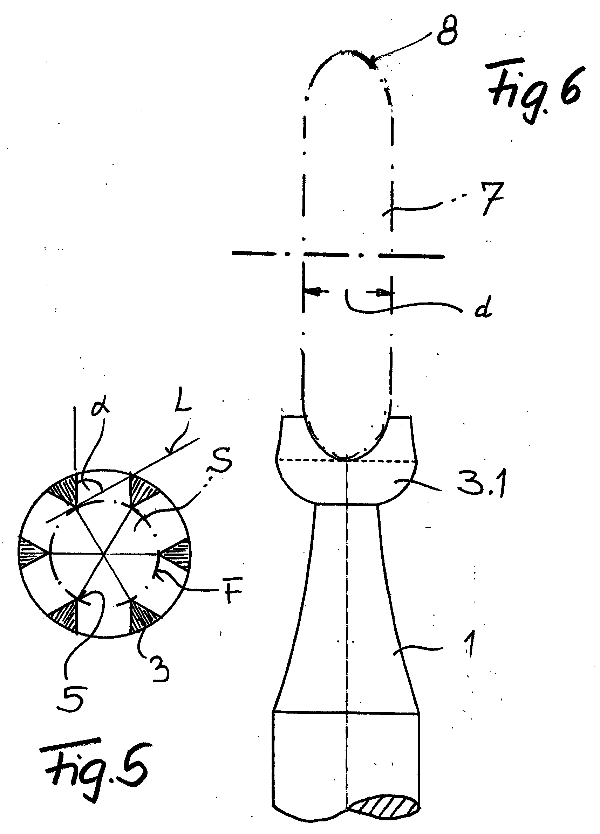

Fig. 5 zeigt eine Ausführungsform mit sechs Schneidfingern 3, die für die Bearbeitung von größeren Stotzendurchmessern zweckmäßig ist. Der Winkel der Schneidkanten 5 in bezug auf die Eingriffslinie L am Werkstück (vgl. Fig. 4) ist mit 30° entsprechend kleiner.

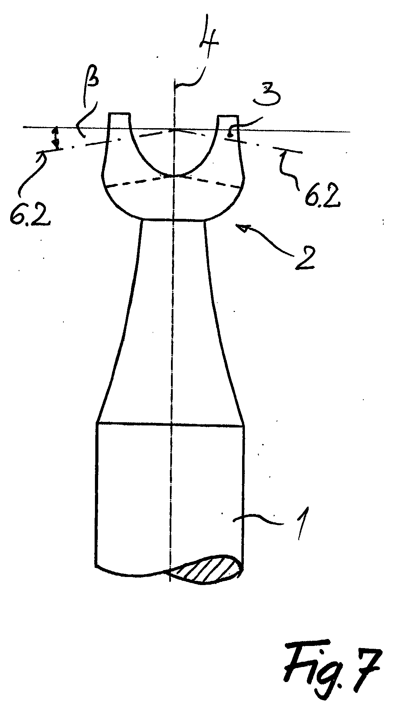

Nach dem erfindungsgemäßen Verfahren läßt sich ein derartiges Fräswerkzeug dadurch herstellen, daß, wie in Fig. 6 angedeutet, in einen mit dem Spannschaft 1 verbundenen Schneidkopfrohling 3.1 stirnseitig beispielsweise zwei sich unter einem Winkel von 90° kreuzende Rillen 6 (vgl. Fig. 2) eingearbeitet werden. Dies kann, wie in Fig. 6 dargestellt, beispielsweise durch ein rotierendes scheibenförmiges Schleifwerkzeug 7 erfolgen. Der Durchmesser des Schleifwerkzeugs 7 kann entsprechende den Vorgaben der Fertigungseinrichtung gewählt werden, da es für die Herstellung des Fräswerkzeugs lediglich auf die Dicke d der Schleifscheibe ankommt. Da die Rillen durch einen Schleifvorgang herstellbar sind, können die Schneidfinger 3 auch aus einem Schneidkopf 2 aus hochfesten Schneidwerkstoffen herausgearbeitet werden. Neben Stählen in Werkzeugqualität kommen auch gehärtete Stähle in HSS-Qualität und auch gesinterte Hartstoffe in Betracht, wie beispielsweise Hartmetalle.

Der Schneidkopf 2 kann einstückig stoffschlüssig mit dem Spannschaft 1 verbunden sein oder aber aus einem höherwertigen Schneidwerkstoff bestehen und beispielsweise durch Hartlöten mit einem Spannschaft aus Stahl verbunden sein.

Das scheibenförmige Werkzeug 7 weist eine Arbeitskontur 8 auf, deren Form auf die Vorgabe der Kontur der Gesamtschneide abgestimmt sein muß. Soll eine teilkreisförmige Gesamtschneide hergestellt werden, wie sie in Fig. 3 dargestellt ist, dann muß dementsprechend die Arbeitskontur 8 nach den Regeln der Kegelschnitte einer Ellipse entsprechen. Die Gesamtschneide sollte zweckmäßig einen Teilkreis bilden, der kleiner ist als ein Halbkreis, so daß das handgeführte rotierende Fräswerkzeug um die Mittelachse des Stotzens kreisendpendelnd bewegt werden kann, um so eine einwandfreie kalottenförmige glatte Abrundung des freien Stotzenendes ohne sichtbare Übergangskante zum zylindrischen Teil zu erhalten.

Aus der Aufsicht gem. Fig. 2 ist außerdem abzuleiten, daß unabhängig von der Umfangskontur des Schneidkopfes 2 die dargestellte Schneidengeometrie und Schneidenkontur immer entsteht, wenn zwei oder auch drei sich kreuzende Rillen mit gleicher Breite d stirnseitig in den Schneidkopfrohlings 3.1 eingearbeitet werden. Damit ist auch die Möglichkeit gegeben, selbst bei sehr kleinen Arbeitsdurchmessern D des herzustellenden Fräswerkzeugs Schneidfinger 3 mit hinreichender Stärke und damit hinreichender Festigkeit zu erzeugen.

Während bei der Ausführungsform gem. Fig. 1 bzw. Fig. 6 die beiden sich kreuzenden Rillen 6 mit ihren beiden Längsachsen 6.1 in einer Ebene verlaufen, die senkrecht zur Drehachse 4 ausgerichtet ist, ist bei der Ausführungsform gem. Fig. 7 die Längsachse 6.1 der einen Rille 6 senkrecht zur Drehachse 4 ausgerichtet und die Teillängsachse 6.2 der anderen Rille jeweils unter einem gegen den Spannschaft 1 fallenden Winkel β ausgerichtet. Diese Form hat insbesondere bei Werkzeugen mit größeren Arbeitsdurchmessern D den Vorteil, daß auch noch im Bereich der Drehachse 4 wenigstens eine ausgeprägte Schneidkante 5 vorhanden ist, durch die eine noch ausreichende, wenn auch geringere Zerspanungsleistung erbracht wird.

Es ist auch möglich, bei beiden Rillen 6 das Werkzeug 7 so zu führen, daß ihre Teillängsachsen 6.2 unter einem Winkel β zur Drehachse 4 verlaufen

## Patentansprüche

1. Fräswerkzeug zum Bearbeiten von Enden stiftförmiger Werkstücke aus Metall, insbesondere aus Edelmetall, mit einem Spannschaft (1) und mit einem Schneidkopf (2), der axial ausgerichtete Schneidfinger (3) aufweist, die in bezug auf die Drehachse (4) und in Umfangsrichtung jeweils mit Abstand zueinander angeordnet sind und die jeweils auf ihrer nach innen gerichteten Seite mit einer Schneidkante (5) versehen sind, deren Kontur so geformt ist, daß bei Rotation die am Werkstück herzustellende Kontur entsteht.

2. Fräswerkzeug nach Anspruch 1, **dadurch gekennzeichnet, daß** die Schneidkanten (5) der einzelnen Schneidfinger (3) in der Drehachse (4) zusammenlaufen.

3. Fräswerkzeug nach Anspruch 1 oder 2, **dadurch gekennzeichnet, daß** am Schneidkopf (2) die Schneidfinger (3) diametral gegenüberliegend und in Umfangsrichtung mit gleichem Abstand zueinander angeordnet sind.

4. Fräswerkzeug nach einem der Ansprüche 1 bis 3, **dadurch gekennzeichnet, daß** die Schneidkanten (5) der sich gegenüberliegenden Schneidfinger (3) eine der herzustellenden Werkstückkontur entsprechend geformte Gesamtschneide darstellen.

5. Fräswerkzeug nach einem der Ansprüche 1 bis 4, **dadurch gekennzeichnet, daß** die Gesamtschneide eine gekrümmte Kontur, vorzugsweise eine Teilkreiskontur aufweist.

6. Fräswerkzeug nach einem der Ansprüche 1 bis 5, **dadurch gekennzeichnet, daß** am Schneidkopf (2) wenigstens vier Schneidfinger (3) angeordnet sind.

7. Fräswerkzeug nach einem der Ansprüche 1 bis 6, **dadurch gekennzeichnet, daß** zumindest der Schneidkopf (2) mit seinen Schneidfingern (3) aus einem härteren Schneidwerkstoff als Werkzeugstahl, insbesondere aus einem Hartmetall besteht.

8. Fräswerkzeug nach einem der Ansprüche 1 bis 7, **dadurch gekennzeichnet, daß** die Schneidfinger (3) durch wenigstens zwei sich kreuzende Rillen (6) im Schneidkopf (2) gebildet sind.

9. Fräswerkzeug nach einem der Ansprüche 1 bis 8, **dadurch gekennzeichnet, daß** die sich kreuzenden Rillen (6) mit ihren Längsachsen (6.1) in einer Ebene verlaufen, die senkrecht zur Drehachse (4) ausgerichtet ist.

10. Fräswerkzeug nach einem der Ansprüche 1 bis 8, **dadurch gekennzeichnet, daß** die sich kreuzenden Rillen (6) so ausgerichtet sind, daß bei wenigstens einer Rille (6) in bezug auf die Drehachse (4) die Teillängsachsen (6.2) jeweils unter einem gegen den Spannschaft (1) fallenden Winkel β ausgerichtet sind.

11. Verfahren zur Herstellung eines mit einem Spannschaft (1) und einem Schneidkopf (2) mit axial ausgerichteten Schneidfingern (3) versehenen Fräswerkzeug, zur Bearbeitung von Metallen entsprechend den Ansprüchen 1 bis 9, **dadurch gekennzeichnet, daß** in einen mit dem Spannschaft (1) verbundenen Schneidkopfrohling (3.1) stirnseitig wenigstens zwei sich unter einem Winkel kreuzende Rillen (6) eingearbeitet werden.

12. Verfahren nach Anspruch 11, **dadurch gekennzeichnet, daß** zwei sich unter einem Winkel von 90° kreuzende Rillen (6) in den Schneidkopfrohling (3.1) eingearbeitet werden.

13. Verfahren nach Anspruch 12, **dadurch gekennzeichnet, daß** drei sich jeweils unter 60° kreuzenden Rillen in den Schneidkopfrohling (3.1) eingearbeitet werden.

14. Verfahren nach einem der Ansprüche 11 bis 13, **dadurch gekennzeichnet, daß** die Rillen (6) mit einem scheibenförmigen Werkzeug (7), vorzugsweise einem Schleifwerkzeug eingearbeitet werden.

15. Verfahren nach Anspruch 11 bis 14, **dadurch gekennzeichnet, daß** die Arbeitskontur (8) des Werkzeugs (7) die Kontur einer Gesamtschneide (5) formt.
